(19) Europäisches Patentamt
European Patent Office
Office européen des brevets

(11) Veröffentlichungsnummer: **0 430 875 A2**

(12) **EUROPÄISCHE PATENTANMELDUNG**

(21) Anmeldenummer: **90810889.7**

(51) Int. Cl.5: **C09D 5/02**, C09D 7/12

(22) Anmeldetag: **20.11.90**

(30) Priorität: **28.11.89 US 442092**

(43) Veröffentlichungstag der Anmeldung:
**05.06.91 Patentblatt 91/23**

(84) Benannte Vertragsstaaten:
**DE FR GB IT Patentblatt**

(71) Anmelder: **CIBA-GEIGY AG**
**Klybeckstrasse 141**
**CH-4002 Basel(CH)**

(72) Erfinder: **Jaffe, Edward Ephraim, Dr.**
**3 Crenshaw Drive**
**Wilmington, Delaware 19810(US)**
Erfinder: **Wallquist, Olof, Dr.**
**Rte du Confin 31**
**CH-1723 Marly(CH)**
Erfinder: **Verhaegen, Rudy**
**Baslerstrasse 212**
**CH-4123 Allschwil(CH)**

(54) **Neue Beschichtungsstoffe auf wässriger Basis, spezifisch modifizierte organische Pigmente enthaltend.**

(57) Beschichtungsstoffe auf wässriger Basis enthaltend als organisches Pigment mindestens eine 1,4-Diketo-3,6-diphenylpyrrolo-[3,4-c]-pyrrol- oder Chinacridon-Komposition, wobei die Pyrrolopyrrolkomposition

a) mindestens ein Pyrrolopyrrol der Formel I

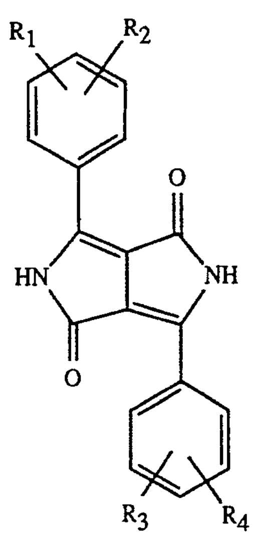

(I) und

b) mindestens ein modifiziertes Pyrrolopyrrol der oben angegebenen Formel I mit mindestens einer Gruppe der Formel $-SO_3L$ enthält, oder die Chinacridonkomposition

c) mindestens ein Chinacridon der Formel II oder eine feste Lösung davon

EP 0 430 875 A2

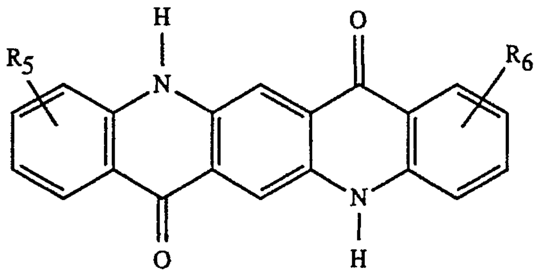

(II) und

d) mindestens ein Chinacridon der oben angegebenen Formel II mit mindestens einer Gruppe der Formel $-SO_3L$ enthält,

worin $R_1$ und $R_3$ unabhängig voneinander -H, -Cl, -Br, $-CH_3$, $-OCH_3$, -CN oder $-C_6H_5$, $R_2$ und $R_4$ unabhängig voneinander -H, -Cl, -Br oder $-CH_3$, und $R_5$ und $R_6$ unabhängig voneinander -H, -Cl, -Br, $-CH_3$ oder $-OCH_3$ sind, und L -H,, eine Gruppe der Formel

$$\frac{M^{n\oplus}}{n}$$

oder$N^{\oplus}H(R_7)(R_8)(R_9)$ darstellt, wobei M ein ein-, zwei- oder dreiwertiges Metallkation, n die Zahlen 1,2 oder 3, und $R_7$, $R_8$ und $R_9$ unabhängig voneinander -H, Alkyl, Aralkyl, $C_5$-$C_6$-Cycloalkyl oder Aryl bedeuten, oder $R_8$ und $R_9$ zusammen mit dem N-Atom einen Pyrrolidin-, Imidazolidin-, Piperidin-, Piperazin- oder Morpholinrest, oder $R_7$, $R_8$ und $R_9$ zusammen mit dem N-Atom einen Pyrrol-, Pyridin-, Picolin-, Pyrazin-, Chinolin- oder Isochinolinrest bilden, eignen sich ausgezeichnet zum Einfärben von Anstrich- und Lacksystemen auf wässriger Basis.

## NEUE BESCHICHTUNGSSTOFFE AUF WÄSSRIGER BASIS ENTHALTEND SPEZIFISCH MODIFIZIERTE ORGANISCHE PIGMENTE

Die vorliegende Erfindung betrifft neue Beschichtungsstoffe auf wässriger Basis enthaltend spezifisch modifizierte 1,4-Diketo-3,6-diphenylpyrrolo-[3,4-c]-pyrrol- oder Chinacridon-Pigmente, sowie deren Verwendung zur Beschichtung von Unterlagen, insbesondere für die Automobilindustrie.

Eine Reihe wichtiger Faktoren hat in den letzten Jahren dazu geführt, dass sich vor allem in der Technologie von Automobillacken einiges geändert hat. Allein die Notwendigkeit der Verminderung von Lösemittelemissionen bei der Anwendung von Anstrichstoffen bzw. Lacken, z.B. beim Spritzen oder Tauchen, war der Anlass zur Einführung neuer Bindemittel-Systeme auf wässriger Basis. Zudem mussten unter dem Druck des Wettbewerbs ständige Verbesserungen erarbeitet werden, z.B. in Bezug auf den Korrosionsschutz und die Aussenbeständigkeit der Lacksysteme sowie die anwendungstechnischen Eigenschaften.

Umweltfreundlichere Alternativen zu den konventionellen lösemittelhaltigen Systemen, wie wasserverdünnbare Systeme oder Systeme auf wässriger Basis, sind bereits entwickelt worden. Wässrige Dispersionen für den Fassadenputz sind schon seit einigen Jahren im Handel; für industrielle Beschichtungen dagegen sind nur wenige Typen wässriger Anstrichsysteme erhältlich.

Für konventionelle lösemittelhaltige Anstrichmittel ist in den US-Patentschriften Nr. 4791204 und Nr. 4844742 bereits vorgeschlagen worden, bestimmte organische Pigmentklassen mit spezifischen Gruppen, wie Sulfonsäure-, Carbonsäure-, Phosphorsäure-, Amin- oder Phthalimidomethyl-Resten, zu modifizieren, so dass sie in der Applikation, insbesondere in konventionellen lösemittelhaltigen Lacken und Druckfarben, verbesserte Eigenschaften, wie Rheologie, Lagerbeständigkeit und Flockulation, aufweisen.

Für die Beschichtungsstoffe auf wässriger Basis müssen noch höhere Erfordernisse erfüllt werden, da in derartigen wässrigen Systemen entscheidend grössere intermolekulare Wechselwirkungen zwischen den Teilchen des Systems in Erscheinung treten können. Dies führt bei vielen der dort eingesetzten Pigmente zu Rheologieproblemen; zudem können dabei Nuance, Transparenz, Reinheit und Glanz der daraus resultierenden Ausfärbungen stark beeinflusst werden.

Dazu kommt, dass die in den industriellen Beschichtungen eingesetzten organischen Pigmente hohe allgemeine Erfordernisse, wie gute Dispergierbarkeit, einwandfreies rheologisches Verhalten sowie hohe Licht- und Wetterbeständigkeit, erfüllen müssen.

Es wurde nun gefunden, dass durch Behandlung bestimmter Pyrrolopyrrol-und Chinacridonpigmente mit spezifischen Sulfonsäurederivaten davon die anwendungstechnischen Eigenschaften des Pigments, insbesondere die Rheologie, verbessert werden können; zudem bluten die in der Grundlackschicht eingesetzten organischen Pigmente nicht in die Klarlackschicht aus, sofern hierfür ein konventionelles lösemittelhaltiges Bindemittelsystem verwendet wird.

Die vorliegende Erfindung betrifft demnach einen Beschichtungsstoff auf wässriger Basis enthaltend als organisches Pigment mindestens eine 1,4-Diketo-3,6-diphenylpyrrolo-[3,4-c]-pyrrol-oder Chinacridon-Komposition, wobei die Pyrrolopyrrolkomposition

a) mindestens ein Pyrrolopyrrol der Formel I

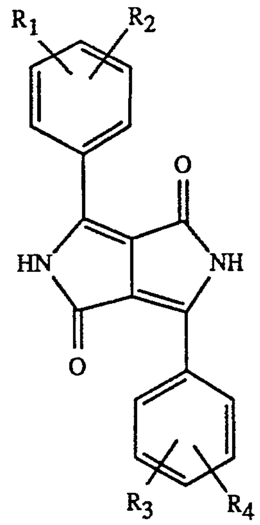

(I) und

b) mindestens ein modifiziertes Pyrrolopyrrol der oben angegebenen Formel I mit mindestens einer Gruppe der Formel $-SO_3L$ enthält, oder die Chinacridonkomposition
c) ein Chinacridon der Formel II oder eine feste Lösung davon

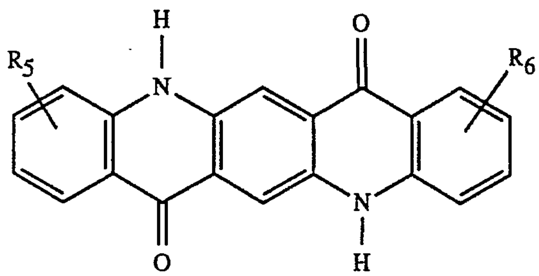

(II) und

d) mindestens ein Chinacridon der oben angegebenen Formel II mit mindestens einer Gruppe der Formel $-SO_3L$ enthält,
worin $R_1$ und $R_3$ unabhängig voneinander -H, -Cl, -Br, $-CH_3$, $-OCH_3$, -CN oder $-C_6H_5$, $R_2$ und $R_4$ unabhängig voneinander -H, -Cl, -Br oder $-CH_3$, und $R_5$ und $R_6$ unabhängig voneinander -H, -Cl, -Br, $-CH_3$ oder $-OCH_3$ sind, und
L -H, eine Gruppe der Formel

$$\frac{M^{n\oplus}}{n},$$

oder $N^{\oplus}H(R_7)(R_8)(R_9)$ darstellt, wobei M ein ein-, zwei- oder dreiwertiges Metallkation, n die Zahlen 1,2 oder 3, und $R_7$, $R_8$ und $R_9$ unabhängig voneinander -H, Alkyl, Aralkyl, $C_5$-$C_6$-Cycloalkyl oder Aryl bedeuten, oder $R_8$ und $R_9$ zusammen mit dem N-Atom einen Pyrrolidin-, Imidazolidin-, Piperidin-, Piperazin- oder Morpholinrest, oder $R_7$, $R_8$ und $R_9$ zusammen mit dem N-Atom einen Pyrrol-, Pyridin-, Picolin-, Pyrazin-, Chinolin- oder Isochinolinrest bilden.

Bedeuten $R_7$, $R_8$ und $R_9$ Alkylgruppen, so können diese verzweigt oder unverzweigt sein und weisen vorzugsweise 1-18 C-Atome, auf. Als Beispiele seien Methyl, Ethyl, n-Propyl, Isopropyl, n-Butyl, sek.-Butyl, tert.-Butyl, tert.-Amyl, n-Hexyl, n-Octyl, Dodecyl, Hexadecyl und Stearyl genannt.

Bedeuten $R_7$, $R_8$ und $R_9$ Aralkylgruppen, dann vorzugsweise solche, die eine 1-6 und insbesondere 1-4 C-Atome enthaltende, verzweigte oder unverzweigte Alkylkette und einen vorzugsweise mono- oder bicyclischen Arylrest enthalten. Als Beispiele seien Benzyl und Phenylethyl genannt.

Sind $R_7$, $R_8$ und $R_9$ Cycloalkyl, so handelt es sich dabei beispielsweise um Cyclopentyl oder Cyclohexyl.

Sind $R_7$, $R_8$ und $R_9$ Aryl, so handelt es sich dabei beispielsweise um Phenyl oder Naphthyl, insbesondere um unsubstituiertes oder durch Halogen, wie Chlor oder Brom, $C_1$-$C_{18}$-Alkyl oder $C_1$-$C_{18}$-Alkoxy substituiertes Phenyl.

$C_1$-$C_{18}$-Alkyl und $C_1$-$C_{18}$-Alkoxy bedeuten z.B. Methyl, Ethyl, Isopropyl, tert.-Butyl, tert.-Amyl, n-Hexyl, Octyl, Decyl, Dodecyl der Stearyl, sowie Methoxy, Ethoxy, Isopropoxy, tert.-Butoxy, n-Hexyloxy, Decyloxy, Dodecyloxy oder Stearyloxy.

Als Beispiele für $N^{\oplus}H(R_7)(R_8)(R_9)$ seien genannt: $N^{\oplus}H_4$, $N^{\oplus}H_3(CH_3)$, $N^{\oplus}H_2(CH_3)_2$, $N^{\oplus}H_3C_2H_5)$, $N^{\oplus}H_2$-$(C_2H_5)_2$, $N^{\oplus}H_3(C_3H_7$-iso), $N^{\oplus}H_3(C_{18}H_{37})$, $N^{\oplus}H_3$-(Cyclohexyl), $N^{\oplus}H_2$(Cyclohexyl)$_2$, $N^{\oplus}H_2(CH_3)(C_6H_5)$, $N^{\oplus}H_3$-$(C_6H_5)$, $N^{\oplus}H_3$(para-Toluidin) und $N^{\oplus}H_3$(Benzyl).

Stellt L eine Gruppe der Formel

$$\frac{M^{n\oplus}}{n}$$

dar, so handelt es sich dabei beispielsweise um ein Alkali-, ein Erdalkali- oder ein Übergangsmetallkation, insbesondere aber um $Na^{\oplus}$, $K^{\oplus}$, $Mg^{2\oplus}$, $Ca^{2\oplus}$, $Sr^{2\oplus}$, $Ba^{2\oplus}$, $Mn^{2\oplus}$, $Zn^{2\oplus}$, $Cu^{2\oplus}$, $Ni^{2\oplus}$, $Cd^{2\oplus}$, $Co^{3\oplus}$, $Al^{3\oplus}$ und $Cr^{3\oplus}$.

Die Komponenten b) und d) der obigen Kompositionen können z.B. eine bis vier $SO_3L$-Gruppen enthalten, vorzugsweise aber eine oder zwei derartige Gruppen für die Komponente b) und eine oder zwei dieser Gruppen für die Komponente d). L ist vorzugsweise eine Gruppe der Formel

$$\frac{M^{n\oplus}}{n}.$$

Das Mengenverhältnis der Komponenten in den erfindungsgemässen Stoffkompositionen kann beliebig variieren. Bevorzugte Verhältnisse liegen jedoch zwischen insgesamt 0,1 und 25 Gew.% der modifizierte(n) Komponente(n) b) bzw. d) und zwischen 99,9 und 75 Gew.% der Komponente a) bzw. c), insbesondere aber zwischen insgesamt 1 und 5 Gew.% der Komponente(n) b) bzw. d) und zwischen 95 und 99 Gew.% der Komponente a) bzw. c).

Zweckmässig enthalten die erfindungsgemäss in Frage kommenden Pyrrolopyrrol-und Chinacridon-Kompositionen zwei bis vier Komponenten b) bzw. d) pro Komponente a) bzw. c).

Bevorzugte Pyrrolopyrrolkompositionen enthalten eine Komponente der Formel I und mindestens eine Komponente der Formel I mit mindestens ner $SO_3L$-Gruppe, wobei $R_1$ und $R_3$ unabhängig voneinander -H, -Cl, -Br, $-CH_3$, $-OCH_3$, -CN oder $-C_6H_5$, $R_2$ und $R_4$ -H und L H, Na, K, $\frac{Mg}{2}$, $\frac{Ca}{2}$, $\frac{Sr}{2}$, oder $\frac{Ba}{2}$ bedeuten.

Bevorzugt befinden sich die Substituenten -Cl, -Br, $-CH_3$ und-$C_6H_5$ in para-Stellung, und die Gruppen -CN und $-OCH_3$ in meta-Stellung zum Diketopyrrolopyrrolgerüst.

Ganz bevorzugt bedeuten $R_1$ und $R_3$ -H oder-Cl, $R_2$ und $R_4$ -H und L $\frac{Ca}{2}$.

Bevorzugt befindet sich der Sulfonsäurerest in para-Stellung zum Diketopyrrolopyrrolgerüst.

Die erfindungsgemässen Pyrrolopyrrolkompositionen können durch Mischen der einzelnen Pyrrolopyrrol-Komponenten a) und b) im gewünschten Mengenverhältnis oder aber auch durch teilweise Sulfonierung der Pyrrolopyrrol-Komponente a) erhalten werden. Die Komponenten b) können nach an und für sich bekannten Verfahren hergestellt werden, beispielsweise durch Sulfonierung der Pyrrolopyrrol-Komponente a) mittels Oleums, Schwefelsäure, flüssigen Schwefeltrioxids oder Chlorsulfonsäure, wobei mindestens einer der Phenylreste des Pyrrolopyrrolmoleküls eine sulfonierbare Stelle aufweisen muss. Die einzusetzende Konzentration des Sulfonierungsrmittels und die auszuwählenden Reaktionsbedingungen hängen eng mit der Anzahl der Sulfonsäure-Gruppen zusammen, welche in das Pyrrolopyrrolmolekül eingeführt werden sollen. Die so erhaltenen Produkte werden anschliessend durch Umsetzung mit einem erfindungsgemäss in Frage kommenden Metallsalz, wie einem Acetat-, Carbonat-, Chlorid-, Nitrat- oder Sulfatsalz, oder mit einem erfindungsgemäss geeigneten Amin in die entsprechenden Metall- bzw. Aminsalzderivate, übergeführt.

Die Pyrrolopyrrole gemäss der Komponente a) der erfindungsgemässen Stoffkompositionen stellen bekannte Produkte dar und können beispielsweise gemäss der US-Patentschrift Nr. 4579949 hergestellt werden; die Komponenten b) sowie deren Herstellung sind in der US-Patentschrift Nr. 4791204 beschrieben.

Die Chinacridonkomponenten c) und d) stellen auch bekannte Produkte dar, wobei die Komponenten d) z.B. gemäss dem US-Patent Nr. 3 386 843 hergestellt werden können.

Bevorzugte Chinacridonkompositionen enthalten eine Verbindung der Formel II oder eine feste Lösung

davon und mindestens ein Chinacridon der obigen Formel II mit mindestens einer Gruppe der Formel $-SO_3L$, wobei $R_5$ und $R_6$ -H, -Cl, $-CH_3$ oder $-OCH_3$ und L -H, $\frac{Al}{3}$, $\frac{Cr}{3}$, $\frac{Co}{3}$, $\frac{Mg}{2}$, $\frac{Zn}{2}$, $\frac{Zn}{2}$, $\frac{Cu}{2}$, $\frac{Cd}{2}$, $\frac{Mn}{2}$ oder $\frac{Ni}{2}$, insbesondere aber -H und ganz besonders $\frac{Al}{3}$ bedeuten.

Beispiele von Chinacridonen der Formel II und festen Lösungen davon, die erfindungsgemäss mit sulfonierten Chinacridonen der Formeln II behandelt werden können, sind:

Chinacridone, z.B. $\beta$-Chinacridon in transparenter Form und $\gamma$-Chinacridon, insbesondere die opake Form, ferner Dichlorchinacridone, Difluorchinacridone, Dimethylchinacridone und Dimethoxychinacridone, sowie feste Lösungen davon. Als typische Beispiele seien genannt: feste Lösungen von 2,9-Dichlorchinacridon mit Chinacridon, besonders die transparenten Formen davon, z.B. 90 % 2,9-Dichlorchinacridon mit 10 % Chinacridon, feste Lösungen von Chinacridon mit 2,9-Dimethylchinacridon, z.B. 73 % Chinacridon mit 27 % 2,9-Dimethylchinacridon als transparentes rotes Pigment, 60 % Chinacridon mit 40 % 2,9-Dimethylchinacridon als transparentes blaustichig rotes Pigment, 60 % Chinacridon mit 40 % 2,9-Dichlorchinacridon oder etwa 60 % Chinacridon mit 40 % 4,11-Dichlorchinacridon.

Wie bereits oben erwähnt, kann die Zahl der $SO_3L$-Gruppen in der Chinacridonkomponente variieren. Bevorzugt enthält die Komponente d) eine oder zwei $SO_3L$-Gruppen, ganz bevorzugt aber nur eine $SO_3L$-Gruppe, insbesondere in 2- und/oder 9-Stellung des Chinacridonmoleküls.

Bevorzugt werden die erfindungsgemässen Chinacridonkompositionen durch teilweise Sulfonierung der Komponente c) oder durch Mischen der einzelnen Chinacridonkomponenten c) und d) im gewünschten Mengenverhältnis erhalten.

So kann das Chinacridon in dem notwendigen Ausmass sulfoniert (oder mit den benötigten Mengen eines Produktes der direkten Sulfonierung gemischt werden) und der sulfonierte Teil zur gewünschten sulfonierten Chinacridonverbindung, wie einem Metall salz, während der anschliessenden Verfahrensschritte umgewandelt werden. Andererseits kann die gewünschte sulfonierte Chinacridonverbindung getrennt hergestellt und in der nötigen Menge mit dem nichtsulfonierten Chinacridon gemischt werden. Werden die Pigmentteilchen beim Mischen nicht beeinflusst, ist die Art des Einarbeitens der sulfonierten Chinacridonverbindung in das nichtsulfonierte Chinacridon nicht kritisch. Ist die Kristallgrösse der Chinacridonkomponenten nicht optimal oder werden die Pigmentteilchen beim Mischen beeinflusst, so kann z.B. gemäss US-Patent Nr. 3030370 vorgegangen bzw. gemahlen werden.

Je nach Verwendungszweck kann man die erfindungsgemässen Stoffkompositionen durch Konditionierung in eine deckendere oder transparentere Pigmentform überführen.

Unter Konditionierung versteht man die Herstellung einer feinen Pigmentpartikelform, beispielsweise durch Trockenmahlung mit oder ohne Salz, durch Lösungsmittel-oder wässrige Mahlung oder durch Salzknetung. Typische Herstellungsverfahren für die erfindungsgemässen Chinacridon-Kompositionen sind z.B. im US-Patent Nr. 4541872 beschrieben, z.B. die Verfahrensbedingungen von Beispiel 1 oder Beispiel 4 für die Mahlung/Behandlung von Chinacridonpigmenten sowie deren festen Lösungen und anschliessendes Mischen mit der modifizierten (sulfonierten) Chinacridonkomponente.

Wird eine deckendere Pigmentform gewünscht, so erweist sich in der Regel eine thermische Nachbehandlung in Wasser oder in einem organischen Lösungsmittel als zweckmässig, gegebenenfalls unter Druck. Vorzugsweise verwendet man organische Lösungsmittel, wie durch Halogenatome, Alkyl- oder Nitrogruppen substituierte Benzole, wie Xylole, Chlorbenzol, o-Dichlorbenzol oder Nitrobenzol, sowie Pyridinbasen, wie Pyridin, Picolin oder Chinolin, ferner Ketone, wie Cyclohexanon, Alkohole, wie Isopropanol, Butanole oder Pentanole, Ether, wie Ethylenglykolmonomethyl- oder -monoethylether, Amide, wie Dimethylformamid oder N-Methylpyrrolidon, sowie Dimethylsulfoxid oder Sulfolan. Man kann die Nachbehandlung auch in Wasser, gegebenenfalls unter Druck, in Gegenwart von organischen Lösungsmitteln und/oder mit Zusatz von oberflächenaktiven Substanzen durchführen.

Beschichtungsstoffe im Sinne der vorliegenden Erfindung sind z.B. Anstrichstoffe und insbesondere Lacke, z.B. für die Automobilindustrie.

Beschichtungsstoffe auf wässriger Basis, die mit den erfindungsgemässen Kompositionen pigmentiert werden können, sind z.B. Systeme auf Acryl-, Polyurethan-, Polyester- oder Polyisocyanatbasis oder Kombinationen davon, wie Acryl-Polyester-Systeme, ferner Acryl-Latex-Systeme oder Epoxidharz-Systeme (z.B. mit Polyaminen vernetzbar), oder Polyacetoacetat/Polyketiminsysteme. Beispiele solcher Systeme sind z.B. in Progress in Organic Coatings 17, S. 27-29, (1989) und in der europäischen Patentanmeldung Nr. 0089497 (für PUR-Dispersionen) beschrieben.

Erfindungsgemäss bevorzugte Systeme für die Automobillackierung sind Polyester/Polyurethan-und Acryl/Latex-Dispersionen.

Die erfindungsgemässen Kompositionen sind insbesondere zum Färben von wässrigen Grundanstrichen und Grundlacken in sogenannten Grundanstrich-/Klaranstrich-Systemen bzw. Grundlack/Klarlack-Systemen ["basecoat-/clearcoat"-Systeme] geeignet, wobei sich der Klaranstrich bzw. -lack (oft transparenter Deckanstrich bzw. -lack genannt) von einem konventionellen lösemittelhaltigen Bindemittel-System ableitet. Beispiele lösemittelhaltiger Bindemittel-Systeme sind Acryl-, Alkyd-, Polyurethan-, Epoxy-, Phenol-, Melamin-, Harnstoff-, Polyester- und Celluloseesterharze oder Kombinationen davon.

Die Dicke der Beschichtung kann beliebig variieren und hängt von der Anwendung ab; die Beschichtung kann z.B. eine Dicke von 3-60 µm aufweisen; sie kann zwei- oder mehrschichtig sein, wie z.B. bei Anwendung in der Automobilindustrie. In diesem Fall ist der Grundanstrich bzw. -lack mit einer oder mehreren Klarschichten überzogen. Für den Klaranstrich bzw. Deckanstrich werden als Bindemittel bevorzugt hitzehärtbare Acryl-Melamin-, Alkyd-Melamin- oder Acryl-Urethanharzkombinationen eingesetzt, wie sie an und für sich auf dem Gebiet der Automobillackierung bekannt sind. Die Klaranstrich- bzw. Klarlackschicht hat zweckmässig eine Dicke von 30-60 µm.

Die erfindungsgemässen Beschichtungsstoffe können eine bis mehrere Pyrrolopyrrol- oder Chinacridon-Kompositionen gemäss a) und b) bzw. c) und d) enthalten; bevorzugt aber enthalten sie nur eine dieser Kompositionen, je nach Anwendung eine transparente oder eine deckende Version davon, gegebenenfalls in Kombination mit anderen organischen und/oder anorganischen Pigmenten oder Farbstoffen, die sich insbesondere für die Herstellung von Automobillacken eignen. Auch Perlglanzpigmente können mitverwendet werden, z.B. die sogenannten "Fischsilber" Titandioxid-Glimmer-Pigmente, wobei die letzteren auch andere bunte Metalloxide, wie Eisen-, Kobalt-, Mangan- oder Chromoxid, enthalten können.

In den erfindungsgemässen Beschichtungsstoffen liegt die Pyrrolopyrrol-oder Chinacridon-Komposition zweckmässig in Mengen von 0,1 bis 20 Gew.%, bevorzugt aber von 0,5 bis 10 Gew.%, bezogen auf die trockene Beschichtungsschicht, vor.

Es kann von Vorteil sein, die erfindungsgemässen Kompositionen vor der Verwendung für die erfindungsgemässen Beschichtungsstoffe mit einem Texturschutzmittel zu behandeln.

Geeignete Texturschutzmittel sind beispielsweise Fettsäuren mit mindestens 12 C-Atomen, wie Stearinsäure oder Behensäure, deren Amide, Salze oder Ester, wie Magnesiumstearat, Zinkstearat, Aluminiumstearat oder Magnesiumbehenat, ferner quartäre Ammoniumverbindungen, wie Tri-($C_1$-$C_4$)-alkylbenzylammoniumsalze, ferner Weichmacher, wie epoxidiertes Sojabohnenöl, Wachse, wie Polyethylenwachs, Harzsäuren, wie Abietinsäure, Kolophoniumseife, hydriertes oder dimerisiertes Kolophonium, $C_{12}$-$C_{18}$-Paraflindisulfonsäuren, Alkylphenole, Alkohole, Diole oder Polyole mit mindestens 8 C-Atomen.

Zur Herstellung der erfindungsgemässen Beschichtungsschichten können die erfindungsgemässen Pyrrolopyrrol- oder Chinacridon-Kompositionen einzeln oder vorgemischt nach bekannten Methoden in das Bindemittel des Beschichtungsstoffes eindispergiert werden. Dabei können geringe Mengen von wasserlöslichen Lösungsmitteln verwendet werden, z.B. Glykolmonoether, wie Ethylenglykolmonomethyl-, -monoethyl- oder -monobutylether, ferner Ethylenglykol, Diethylenglykol, Propylenglykol, aliphatische Alkohole, wie Ethanol, Propanol, Butanol, Isobutanol oder Amylalkohol, Ketone, wie z.B. Aceton, Methyl-Ethylketon, Methyl-Isobutylketon oder Diacetonalkohol, ferner Dimethylformamid oder N-Methylpyrrolidon. Ferner können weitere nichtflüchtige Bestandteile zugegeben werden, wie Weichmacher, Hilfsstoffe, Füllstoffe, Lichtschutzmittel, Hitzestabilisatoren, Antioxidantien und anorganische Pigmente, wie Schwarzpigmente, sowie Aluminium-oder Kupferpulver. Der homogenisierte Beschichtungsstoff kann beispielsweise durch Streichen, Rollen, Spritzen, Tauchen oder Walzen (Coil-Coating) auf das Substrat aufgetragen und eingebrannt werden.

Beispiele von Substraten sind Holz, Kunststoffe, mineralische Unterlagen und vor allem Metalloberflächen.

Die Klarschicht(en) kann (können) ebenfalls nach bekannten Verfahren hergestellt werden und kann (können) zudem auch Zusatzstoffe, wie Lichtschutzmittel und Antioxidantien, enthalten.

Die erhaltenen Ausfärbungen zeichnen sich durch gute allgemeine Eigenschaften, wie gute Verteilung, hohe Transparenz bzw. Deckkraft und Reinheit, einen guten Glanz sowie gute Überlackier-, Licht- und Wetterbeständigkeit, aus.

Ferner weisen die erfindungsgemässen Kompositionen im Vergleich zu den unmodifizierten Basispigmenten verbesserte anwendungstechnische Eigenschaften in der Applikation auf, wie eine verbesserte Rheologie und Lagerbeständigkeit, geringere Trenneffekte wie Ausschwimmen bei der Mitverwendung von z.B. Weisspigmenten, und eine geringere Flockulationstendenz. Infolge der guten rheologischen Eigenschaften dieser Kompositionen ist es möglich, Anstrichstoffe und Lacke hoher Konzentration (sogenannte high loadings) herzustellen. Sie eignen sich vorzugsweise zum Färben von Automobillacken, insbesondere für Metalleffektlackierungen.

Die nachfolgenden Beispiele dienen zur Erläuterung der Erfindung.

Beispiel 1: In einem Sulfierkolben werden unter Stickstoff 120ml t-Amylalkohol (trocken) vorgelegt. Unter langsamem Rühren werden 6,9g Natrium und 0,1g Sulfobernsteinsäure-bis-2-ethylhexylester-Na-Salz zugegeben, und das Gemisch wird auf 95-102° C aufgewärmt. Das geschmolzene Natrium wird dann unter

heftigem Rühren unter Stickstoff über Nacht bei 95° C gehalten. Die entstandene Lösung wird auf 85° C abgekühlt und mit einer Mischung von 14,04 g 4-Chlorbenzonitril und 10,3 g Benzonitril versetzt. Anschliessend werden bei 95° C innerhalb 2 Stunden 20,3 g Bernsteinsäure-diisopropylester zudosiert. Man lässt die Reaktionsmischung 5 Stunden bei 95° C ausreagieren und dann auf Raumtemperatur abkühlen. Man giesst die erhaltene Mischung auf 300ml kaltes Wasser aus, das Gemisch wird 1 Stunde am Rückfluss erhitzt und anschliessend einer Wasserdampfdestillation unterworfen. Das erhaltene Gemisch wird bei 60° C abfiltriert, mit 1000 ml Wasser gewaschen und im Vakuumofen bei 80° C getrocknet. Ausbeute: 23,6 g eines roten Pulvers enthaltend im wesentlichen die Verbindungen der Formeln

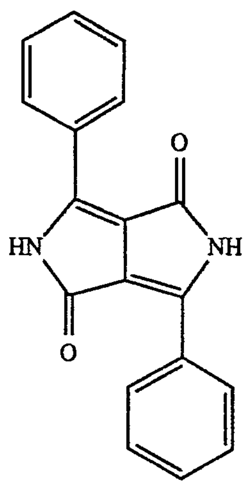 , 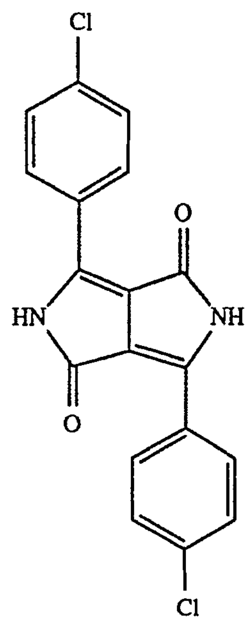 und 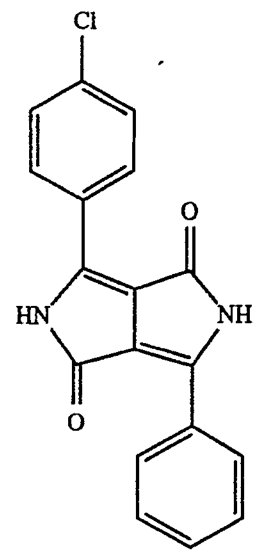

Analyse (%): Gefunden: C 64,93, H 3,45, N 8,38, Cl 13,72.

Beispiel 2: In einem Sulfierkolben werden 160g Oleum (25 %) und 160 g Schwefelsäure-monohydrat vorgelegt und auf 0-5° C abgekühlt. Innerhalb 30 Minuten werden 20 g des gemäss obigem Beispiel 1 erhaltenen Gemisches eingetragen. Man lässt während 20 Stunden bei Raumtemperatur rühren, giesst darauf die Reaktionslösung innerhalb 15 Minuten auf eine Mischung von 1000 g Eis und 280 ml Wasser, und rührt 15 Minuten weiter. Die Temperatur wird auf 72-75° C erhöht, dann werden 120 g NaCl zugegeben, und das Gemisch wird während 1 Stunde bei 72-75° C gerührt. Das Gemisch wird auf Raumtemperatur abgekühlt und filtriert, und der Rückstand wird mit einer 5 %igen NaCl-Lösung gewaschen, bis das Filtrat neutral ist. Der Filterkuchen wird im Vakuumofen bei 80° C getrocknet.

Analyse: Gefunden in %: C 40,67, H 2,32, N 5,09, S 4,8, Cl 17,9.

Das Produkt enthält im wesentlichen die Verbindungen der Formeln

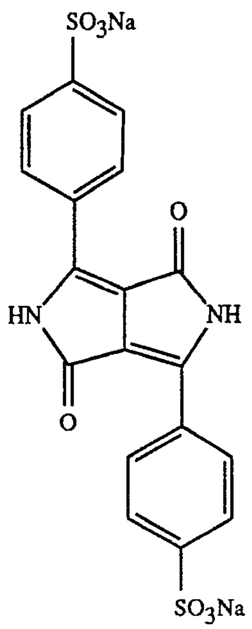
,
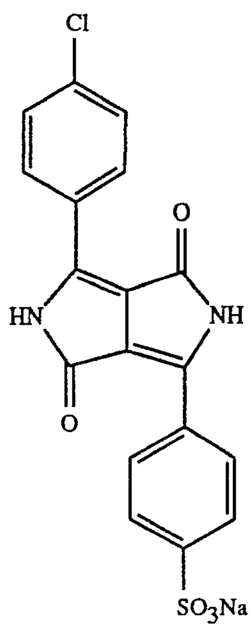
und
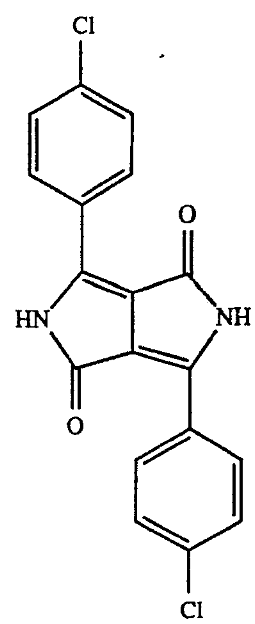

Beispiel 3: In einem Sulfierkolben werden 889 g 1,4-Diketo-3,6-diphenylpyrrolo-[3,4-c]-pyrrol (als feuchter 45 %iger Presskuchen) in 9 Litern deionisiertem Wasser während 1 Stunde ausgerührt. Eine Suspension von 7,6 g des gemäss Beispiel 2 hergestellten Gemisches in 900 ml 60 %igem deionisiertem Wasser wird zur sich im Sullierkolben befindenden Pigmentsuspension zugegeben, und das Gemisch wird 2 Stunden bei 20° C gerührt. Eine Lösung von 114 g $CaCl_2$ (75 %ig) in 700 ml deionisiertem Wasser wird zugegeben, die erhaltene Pigmentmischung wird auf 75° C erwärmt und während 1 Stunde bei 75° C gerührt. Die Suspension wird heiss filtriert und mit ca. 10 Litern Wasser gewaschen. Das Produkt wird im Vakuumofen bei 80° C getrocknet.

Ausbeute: 397 g einer Stoffkomposition enthaltend etwa 98 % des unsubstituierten 1,4-Diketo-3,6-diphenylpyrrolo-[3,4-c]-pyrrolpigmentes und etwa 2 % des gemäss Beispiel 2 modifizierten Pyrrolopyrrolgemisches, wobei die Sulfonsäurereste als Ca-Salz vorliegen.

Beispiel 4: Das Beispiel 3 wird wiederholt, mit dem Unterschied jedoch dass anstelle des dort angegebenen Pyrrolopyrrols 82 g feuchtes 1,4-Diketo-3,6-di(parabromphenyl)-pyrrolo-[3,4-c]-pyrrol (als 30-%iger Presskuchen; entspricht 24,6 g trockener Ware) während einer Stunde in 550 ml deionisiertem Wasser verwendet werden, wobei eine Suspension von 0,55 g des gemäss Beispiel 2 hergestellten Gemisches in 65 ml deionisiertem Wasser zur sich im Sulfierkolben befindenden Pigmentsuspension zugegeben wird und das Gemisch 2 Stunden bei 80° C gerührt wird. Eine Lösung von 7,78 g $CaCl_2$(75-%ig) in 40 ml Wasser wird zugegeben, die erhaltene Pigmentmischung wird auf 75° C erwärmt und während einer Stunde bei dieser Temperatur gerührt. Die Suspension wird heiss filtriert und mit Wasser gewaschen. Das Produkt wird im Vakuumofen bei 80° C getrocknet. Ausbeute: 23,1 g eines roten Produktes, das in Beschichtungssystemen auf wässriger Basis ausgezeichnete rheologische und koloristische Eigenschaften aufweist.

Beispiel 5: Das Beispiel 3 wird wiederholt, mit dem Unterschied jedoch dass anstelle des dort angegebenen Pyrrolopyrrols 79 g 30-%ig feuchtes 1,4-Diketo-3,6-di(paramethyl-phenyl)-pyrrolo-[3,4-c]-pyrrol (= 23,7 g trockener Ware) in 550 ml deionisiertem Wasser, anstelle von 7,6 g 0,53 g des gemäss Beispiel 2 hergestellten Gemisches in 65 ml deionisiertem Wasser und anstelle von 114 g 7,49 g $CaCl_2$ (75-%ig) in 40 ml Wasser verwendet werden. Man erhält 23,7 g eines roten Produktes, das in Beschichtungssystemen auf wässriger Basis ausgezeichnete rheologische und koloristische Eigenschaften aufweist.

Beispiel 6: Das Beispiel 3 wird wiederholt, mit dem Unterschied jedoch dass anstelle des dort angegebenen Pyrrolopyrrols 200 g 30-%ig feuchtes 1,4-Diketo-3,6di(paraphenyl-phenyl)-pyrrolo-[3,4-c]-pyrrol in 3250 ml deionisiertem Wasser, anstelle von 7,6 g 3,6 g des gemäss Beispiel 2 hergestellten Gemisches in 350 ml deionisiertem Wasser und anstelle von 114 g 65 g $CaCl_2$ (75-%ig) in 300 ml verwendet werden. Man erhält 169,4 g eines roten Produktes, das in Beschichtungssystemen auf wässriger Basis ausgezeichnete rheologische und koloristische Eigenschaften aufweist.

Beispiel 7: Das Beispiel 6 wird wiederholt, mit dem Unterschied jedoch dass anstelle von $CaCl_2$ 5,2 g Hexadecyltrimethylammoniumbromid in 190 ml deionisiertem Wasser verwendet werden. Man erhält 176 g eines roten Produktes, das in Beschichtungssystemen auf wässriger Basis ausgezeichnete rheologische

und koloristische Eigenschaften aufweist.

Beispiel 8: Das Beispiel 3 wird wiederholt, mit dem Unterschied jedoch dass anstelle des dort angegebenen Pyrrolopyrrols 73 g 31,8-%ig feuchtes 1,4-Diketo-3,6-di(parachlor-phenyl)-pyrrolo-[3,4-c]-pyrrol (= 23,2 g trockener Ware) in 500 ml deionisiertem Wasser, anstelle von 7,6 g 0,52 g des gemäss Beispiel 2 hergestellten Gemisches in 65 ml deionisiertem Wasser und anstelle von $CaCl_2$ 10,13 g $MgCl_2.6H_2O$ in 40 ml Wasser verwendet werden. Man erhält 23,6 g eines roten Produktes, das in Beschichtungssystemen auf wässriger Basis ausgezeichnete rheologische und koloristische Eigen schaften aufweist.

Beispiel 9: Das Beispiel 3 wird wiederholt, mit dem Unterschied jedoch dass anstelle des dort angegebenen Pyrrolopyrrols 81,6 g 31,4-%ig feuchtes 1,4-Diketo-3,6-di(parachlor-phenyl)-pyrrolo-[3,4-c]-pyrrol (= 25,6 g trockener Ware) in 350 ml deionisiertem Wasser, anstelle von 7,6 g 0,65 g des gemäss Beispiel 3 hergestellten Gemisches in 70 ml deionisiertem Wasser und anstelle von $CaCl_2$ 0,97 g Hexadecyltrimethylammoniumbromid in 30 ml Wasser verwendet werden. Man erhält 27,25 g eines roten Produktes, das in Beschichtungssystemen auf wässriger Basis ausgezeichnete rheologische und koloristische Eigenschaften aufweist.

Beispiel 10: Eine wässrige handelsübliche Polyester/Polyurethanharzdispersion gemäss der europäischen Patentanmeldung Nr. 0089497 (330,75 g; 30 Gew.% Festanteil; 63 Gew.% Wasser; 7 Gew.% eines aliphatischen Alkohols), 37,5 g der gemäss Beispiel 3 erhaltenen Pyrrolopyrrolkomposition und 22,5 g Ethylenglykolmonobutylether werden in einem 1000 ml-Behälter zusammen mit 500 g Glaskugeln (2 mm Durchmesser) bei Raumtemperatur und 2500 Umdrehungen pro Minute während 3 Stunden gemäss ISO 8780-3 (Standard-Dispermatdispergierungsmethode) dispergiert. Dann werden 52,1 g der erhaltenen Dispersion mit 10 g Wasser, 1 ml Ethylenglykolmonobutylether und 24 g der obigen wässrigen Polyester/Polyurethanharzdispersion während 10 Minuten unter normalem Rühren verdünnt. Die erhaltene Dispersion wird dann mit einer Spritzpistole so auf ein Alublech gespritzt und während 30 Minuten bei 80 °C abgedunstet, dass eine trockene Filmdicke von 15-20 µm gebildet wird. Darauf wird dann eine Klarlackschicht eines handelsüblichen lösemittelhaltigen TSA-Lackes mit einer Spritzpistole aufgetragen (trockene Lackfilmdicke: 40-50 µm).

Gemäss obigem Verfahren werden entsprechende Lack-Weissverschnitte mit $TiO_2$ [Konzentration: 10 Teile Buntpigment : 90 Teile $TiO_2$] sowie 50:50-Metallisé-Dispersionen mit Aluminiumpulver hergestellt und appliziert.

Die erhaltenen rheologischen Eigenschaften (gemäss Brookfield) der Volltondispersion sind deutlich besser als die Viskositätswerte der entsprechenden Volltondispersion, die mit dem entsprechenden unmodifizierten Basispyrrolopyrrolpigment auf gleiche Art und Weise hergestellt wurde.

Der Farbtonunterschied (gemäss CIELAB gemessen; ΔS-Wert; Sättigungswert) der Alu-Metallisé-Ausfärbungen zeigt, dass das modifizierte Pyrrolopyrrolpigment eine höhere Sättigung in der Applikation aufweist als das unmodifizierte Pyrrolopyrrolpigment.

Beispiel 11:

a) In einem 4-Hals-Rundkolben (mit Thermometer, Rührer und Trocknungsrohr ausgerüstet) enthaltend 600 g konzentrierter Schwefelsäure werden 60 g rohes γ-Chinacridon langsam eingetragen, wobei die Temperatur auf etwa 45 °C steigt. Dann wird die erhaltene Lösung innerhalb 25 Minuten auf 98 °C erwärmt und bei dieser Temperatur während 75 Minuten weitergerührt. Die warme Lösung wird dann auf Eis/Wasser ausgetragen, worauf das erhaltene Gemisch durch Wasserzugabe auf 1704 g eingestellt wird. Das Gemisch enthält 0,044 g monosulfoniertes Chinacridon pro Gramm Gemisch.

b) 114 g dieses Gemisches werden mit 1630 ml Wasser verdünnt, unter Rühren mit einer Lösung von 26,4 g $Al_2(SO_4)_3 \cdot 18\ H_2O$ in 107 ml Wasser versetzt und während einer Stunde gekocht. Das ausgefallene Produkt wird abfiltriert, mit Wasser säurefrei gewaschen und getrocknet. Ausbeute: 5,6 g eines Produktes folgender Formel

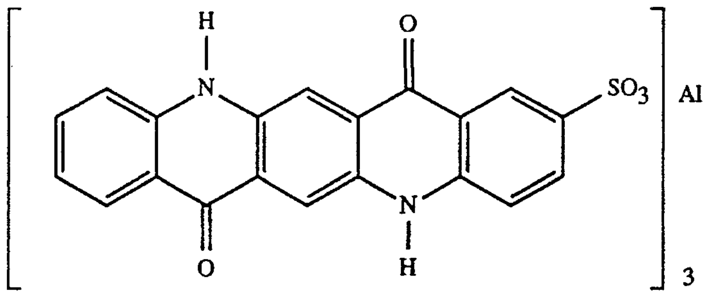

Verbrennungsanalyse: (in %)
Gefunden: S 8,00; Al 1,93;
Theorie: S 8,00; Al 2,25.

c) 1,95 g des obigen Aliminiumsalzes als 20,5 Gew.%iger Presskuchen werden mit 28,9 g γ-Chinacridon (als Presskuchen mit 33,2 Gew.% Festanteil) gut vermischt, wobei das erhaltene Gemisch einen neutralen pH-Wert aufweist. Das Gemisch wird dann bei 90° C getrocknet und pulverisiert. Ausbeute: 10 g.

Beispiel 12: Das gemäss Beispiel 11c) erhaltene Produkt wird dann im gleichen wässrigen Lacksystem wie Beispiel 10 geprüft. Die eingesetzten Mengen der einzelnen Komponenten, die Dispergierung und das Applizieren sind gleich wie im Beispiel 10.

Die erhaltenen rheologischen Eigenschaften (gemäss Brookfield gemessen) der Volltonlackdispersion sind deutlich besser als die Viskositätswerte der entsprechenden Volltondispersion,die mit dem entsprechenden unmodifizierten Basischinacridonpigment auf gleiche Art und Weise hergestellt wurde.

Zudem ist das modifizierte Chinacridonpigment bei der Verdünnungsstufe der eingefärbten Lackdispersion mit dem ungefarbten Lackanteil dispersionsstabil, was nicht der Fall ist, wenn das unmodifizierte Chinacridonpigment verwendet wird.

Die daraus hergestellten Lackfilme weisen vor allem im Vollton und im $TiO_2$-Weissverschnitt eine höhere Sättigung und eine höhere Farbstärke (nach CIELAB gemessen) auf als die entsprechenden Ausfärbungen, die mit dem unmodifizierten Chinacridonpigment auf gleiche Art und Weise hergestellt wurden.

Die gemäss CIELAB gemessene Farbton-Lagerbeständigkeit dieser Lacke (Vollton; Weissverschnitt und Metallisé) ist sowohl nach einer Woche als auch nach drei Wochen deutlich besser als diejenige der entsprechenden Lacke,die mit dem unmodifizierten Chinacridonpigment auf gleiche Art und Weise hergestellt wurden.

Ausserdem weist das modifizierte Chinacridonpigment in der Applikation ausgezeichnete allgemeine Pigmenteigenschaften, wie Licht-, Wetter- und Überlackierbeständigkeit, auf.

Beispiel 13: (Beispiel für die Herstellung einer Chinacridon/modif. Chinacridon-Komposition nach einem Salzmahlungsverfahren)

Eine 240 Liter-Kugelmühle enthaltend 454,5 kg Eisenstäbe (zylindrisch; ca. 1,3 cm Durchmesser und 1,3 cm lang) und 45,5 kg Nägel (ca. 10,5 cm lang) wird mit 3,64kg Chinacridon und 1,36kg 2,9-Dimethylchinacridon, dann mit 19,8 kg handelsüblichem $Al_2(SO_4)_3 \cdot 15\text{-}19\ H_2O$, 0,24 kg des Isopropylaminsalzes der Dodecylbenzolsulfonsäure und 0,73 kg Tetrachlorethylen beladen. Die Mühle wird mit einer Rührgeschwindigkeit von etwa 40 Umdrehungen pro Minute (74 % der kritischen Geschwindigkeit) während 15 Stunden bei einer Temperatur von 50° C betrieben. Das Mahlgut wird ausgeladen, und die Eisenstäbe und Nägel werden mit einem Sieb entfernt; 0,345 kg des erhaltenen Pulvers werden zu einer ausgerührten 50° C-warmen Schwefelsäure-Lösung (0,011 kg konz. $H_2SO_4$ und 0,82 kg Wasser) gegeben. Die erhaltene Suspension wird dann auf 88-93° C erwärmt und während zwei Stunden bei dieser Temperatur weitergerührt, worauf eine wässrige Suspension enthaltend 2,37 g Chinacridonmonosulfonsäure gemäss Beispiel 5a innert 30 Minuten zugegeben wird. Die resultierende Suspension wird während 30 Minuten bei 88-93° C weitergerührt, das Produkt wird abfiltriert, mit warmem Wasser säure- und sulfatfrei gewaschen und getrocknet. Ausbeute: 59,1 g des modifizierten Chinacridonpigmentes.

Dieses Produkt ergibt einwandfreie Lackausfärbungen gemäss Anwendungsbeispiel 10 mit ausgezeichneten anwendungstechnischen und Pigment-Eigenschaften.

Beispiel 14: Eine wässrige handelsübliche Polyester/Polyurethanharzdispersion gemäss der europäischen Patentanmeldung Nr. 0089497 (190 g; 30 Gew.% Festanteil, 63 Gew.% Wasser und 7 Gew.% eines

aliphatischen Alkohols), 20 g der nachstehenden Pyrrolopyrrolkomposition, 4 g einer 10%igen N,N-Dimethylethanolamin-Lösung, 11,25 g Ethylenglykolmonobutylether und 22,5 g Wasser werden in einem 663 ml-Behälter zusammen mit 500 g Steatit-Glaskugeln (12 mm Durchmesser) bei Raumtemperatur und 90 Umdrehungen pro Minute während 96 Stunden dispergiert. Dann wird die erhaltene Dispersion mit Wasser auf eine Viskosität von 20 Sekunden in einem DIN-4-Becher verdünnt. Die erhaltene Dispersion wird dann mit einer Spritzpistole auf ein Alublech gespritzt und während 30 Minuten bei 80 °C abgedunstet, wobei eine trockene Filmdicke von 15-35 µm gebildet wird, und das Substrat wird gedeckt. Darauf wird dann eine Klarlackschicht eines handelsüblichen lösemittelhaltigen TSA-Lackes mit einer Spritzpistole aufgetragen (trockene Lackfilmdicke: 40-50 µm).

Gemäss obigem Verfahren werden entsprechende Lack-Weissverschnitte mit $TiO_2$ (Konzentration: 90 Teile $TiO_2$:10 Teile Buntpigment) hergestellt und appliziert. Mit diesen Lack-Weissverschnitten werden Farbunterschied und Farbstärke gemäss DIN 55986 gemessen.

Die rheologischen Eigenschaften (gemessen gemäss Brookfield Inc., Digital Viskosimeter; Modell RVtdV-II) der Volltondispersion sind besser als die Viskositätswerte der entsprechenden Volltondispersion, die mit dem entsprechenden unmodifizierten Basispyrrolopyrrolpigment auf gleiche Art und Weise hergestellt wird.

Der Farbtonunterschied (gemäss CIELAB nach DIN 6174 gemessen; ΔS-Wert; Sättigungswert) der Lack-Weissverschnitte zeigt, dass das erfindungsgemässe modifizierte Pyrrolopyrrolpigment eine höhere Sättigung in der Applikation aufweist als die unmodifizierte Pyrrolopyrrolkomponente.

Die Farbstärke (gemäss DIN 55986) der Lack-Weissverschnitte mit dem erfindungsgemäss modifizierten Pyrrolopyrrolpigment ist deutlich höher als die Farbstärke der Weissverschnitte mit dem entsprechenden unmodifizierten Basispigment.

Verwendete Pyrrolopyrrolkompositionen (analog dem Herstellungsverfahren des Beispiels 3 hergestellt):

| Beispiel Nr. | Hauptkomponente a) (Pyrrolopyrrol der Formel I) | Modifizierte Pyrrolopyrrolkomponente b) | |
|---|---|---|---|
| | | Chem. Struktur = erhaltenes Gemisch gemäss Beispiel 2, wobei aber die Sulfonsäurereste als folgende Salze vorliegen | Konzentration in Gew.% (*) |
| 14a | $R_1$ = para-Br<br>$R_2$ = -H | Ca-Salz | 2,2 |
| 14b | $R_1$ = para-$CH_3$<br>$R_2$ = -H | Ca-Salz | 2,2 |
| 14c | $R_1$ = para-$C_6H_5$<br>$R_2$ = -H | Ca-Salz | 1,8 |

(*) bezogen auf das Gemisch Pyrrolopyrrolkomponente a) und modifizierte Pyrrolopyrrolkomponente b)

## Ansprüche

1. Beschichtungsstoff auf wässriger Basis enthaltend als organisches Pigment mindestens eine 1,4-Diketo-3,6-diphenylpyrrolo-[3,4-c]-pyrrol- oder Chinacridon-Komposition, wobei die Pyrrolopyrrolkomposition

a) mindestens ein Pyrrolopyrrol der Formel I

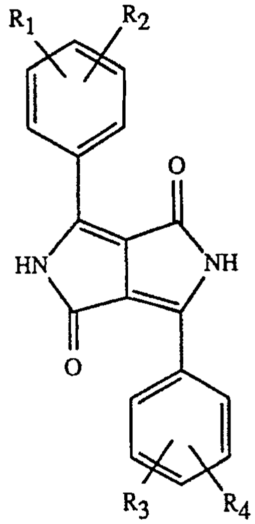

(I) und

b) mindestens ein modifiziertes Pyrrolopyrrol der oben angegebenen Formel I mit mindestens einer Gruppe der Formel $-SO_3L$ enthält, oder die Chinacridonkomposition

c) mindestens ein Chinacridon der Formel II oder eine feste Lösung davon

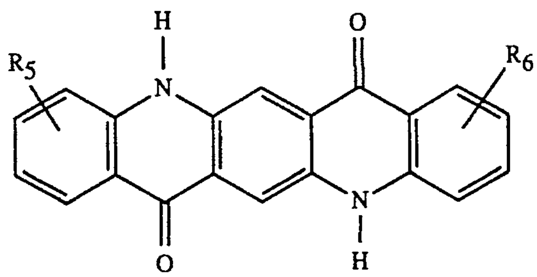

(II) und

d) mindestens ein Chinacridon der oben angegebenen Formel II mit mindestens einer Gruppe der Formel $-SO_3L$ enthält,

worin $R_1$ und $R_3$ unabhängig voneinander-H, -Cl, -Br, $-CH_3$, $-OCH_3$, - CN oder-$C_6H_5$, $R_2$ und $R_4$ unabhängig voneinander-H, -Cl, -Br oder $-CH_3$, und $R_5$ und $R_6$ unabhängig voneinander-H, -Cl, -Br, $-CH_3$ oder $-OCH_3$ sind, und L -H, eine Gruppe der Formel

$$\frac{M^{n\oplus}}{n},$$

oder $N^{\oplus}H(R_7)(R_8)(R_9)$ darstellt, wobei M ein ein-, zwei- oder dreiwertiges Metallkation, n die Zahlen 1,2 oder 3, und $R_7$, $R_8$ und $R_9$ unabhängig voneinander-H, Alkyl, Aralkyl, $C_5$-$C_6$-Cycloalkyl oder Aryl bedeuten, oder $R_8$ und $R_9$ zusammen mit dem N-Atom einen Pyrrolidin-, Imidazolidin-, Piperidin-, Piperazin- oder Morpholinrest, oder $R_7$, $R_8$ und $R_9$ zusammen mit dem N-Atom einen Pyrrol-, Pyridin-, Picolin-, Pyrazin-, Chinolin- oder Isochinolinrest bilden.

**2.** Beschichtungsstoff gemäss Anspruch 1, worin die Pyrrolopyrrolkomponente b) eine oder zwei $SO_3L$-Gruppen und die Chinacridonkomponente d) eine oder zwei $SO_3L$-Gruppen aufweisen.

**3.** Beschichtungsstoff gemäss Anspruch 1, worin L eine Gruppe der Formel

$$\frac{M^{n\oplus}}{n}$$

ist.

4. Beschichtungsstoff gemäss Anspruch 1, worin die Pyrrolopyrrolkomposition eine Komponente a) der Formel I und mindestens eine Komponente b) der Formel I mit mindestens einer Gruppe der Formel $-SO_3L$ enthält, wobei $R_1$ und $R_3$ unabhängig voneinander -H, -Cl, -Br, $-CH_3$, $-OCH_3$, -CN oder$-C_6H_5$, $R_2$ und $R_4$ -H und L H, Na, K, $\frac{Mg}{2}$, $\frac{Ca}{2}$, $\frac{Sr}{2}$ oder $\frac{Ba}{2}$ bedeuten.

5. Beschichtungsstoff gemäss Anspruch 4, worin $R_1$ und $R_3$ -H oder -Cl, $R_2$ und $R_4$ -H und L $\frac{Ca}{2}$ bedeuten.

6. Beschichtungsstoff gemäss Anspruch 1, worin die Chinacridonkomposition eine Komponente c) der Formel II und mindestens eine Komponente d) der Formel II oder eine feste Lösung davon mit mindestens einer Gruppe der Formel $-SO_3L$ enthält, wobei $R_5$ und $R_6$ -H, -Cl, $-CH_3$ oder $-OCH_3$ und L -H, $\frac{Al}{3}$, $\frac{Cr}{3}$, $\frac{Co}{3}$, $\frac{Mg}{2}$,$\frac{Zn}{2}$, $\frac{Cu}{2}$, $\frac{Cd}{2}$, $\frac{Mn}{2}$ oder $\frac{Ni}{2}$ bedeuten.

7. Beschichtungsstoff gemäss Anspruch 6, worin L $\frac{Al}{3}$ ist.

8. Beschichtungsstoff gemäss Anspruch 1, worin das Verhältnis der Komponenten der Pyrrolopyrrol- und Chinacridon-Kompositionen zwischen insgesamt 0,1 und 25 Gew.% der modifizierte(n) Komponente(n) b) bzw. d) und zwischen 99,9 und 75 Gew.% der Komponente a) bzw. c) liegt.

9. Beschichtungsstoff gemäss Anspruch 1, worin der Beschichtungsstoff ein Anstrichstoff oder ein Lack ist.

10. Beschichtungsstoff gemäss Anspruch 1, worin der Beschichtungsstoff ein System auf Acryl-, Polyurethan-, Polyester- oder Polyisocyanat-Basis oder Kombinationen davon, oder ein System auf Acryl-Latex- oder Epoxidharz-Basis, oder auf Polyacetoacetat/Polyketiminbasis ist.

11. Beschichtungsstoff gemäss Anspruch 1, worin der Beschichtungsstoff eine Polyester/Polyurethan-oder Acryl/Latex-Dispersion für die Automobillackierung ist.

12. Beschichtungsstoff gemäss Anspruch 1, worin die Pyrrolopyrrol- oder Chinacridon-Komposition in einer Menge von 0,1 bis 20 Gew.%, bezogen auf die trockene Beschichtungsschicht, eingesetzt wird.

13. Verwendung des Beschichtungsstoffs gemäss Anspruch 1 zum Färben von wässrigen Grundanstrichen und Grundlacken in Grundanstrich-/Klaranstrich-Systemen oder Grundlack-/Klarlack-Systemen, wobei sich der Klaranstrich- oder -lack von einem konventionellen lösemittelhaltigen Bindemittelsystem ableitet.

14. Der mit einem Beschichtungsstoff gemäss Anspruch 1 erhaltene Anstrich-und Lackfilm.